# EUROPÄISCHE PATENTSCHRIFT

(11) **EP 2 481 853 B1**
(45) Veröffentlichungstag und Bekanntmachung des Hinweises auf die Patenterteilung: **30.03.2016**
(21) Anmeldenummer: 12000501.2
(22) Anmeldetag: 26.01.2012
(51) Int. Cl.: E02D 27/44, F16M 5/00

(54) **Fundamentverankerung für Arbeitsmaschine**
Foundation anchor for work machine
Ancrage de fondation pour machine de travail

(30) Priorität: 27.01.2011 DE 102011009592
(43) Veröffentlichungstag der Anmeldung: 01.08.2012
(73) Patentinhaber: Liebherr-Werk Biberach GmbH, 88400 Biberach an der Riss (DE)
(72) Erfinder: Mayer, Joachim, Dipl.-Ing. (FH), 88400 Biberach an der Riss (DE)
(74) Vertreter: Laufhütte, Dieter

(56) Entgegenhaltungen:
- CH-A5- 658 277
- GB-A- 2 344 755
- US-A- 4 660 799
- US-A- 5 016 338

## Beschreibung

Die vorliegende Erfindung betrifft eine Verankerungsvorrichtung zur Verankerung einer Arbeitsmaschine, insbesondere Kran, an einem Fundament.

Die Standfestigkeit für den ordnungsgemäßen Betrieb einer Arbeitsmaschine hängt üblicherweise vom Ausmaß der angreifenden Kräfte, beispielsweise Druck-, Zug- oder auch Torsionskräfte, sowie der bodenseitig durchgeführten Verankerung der Maschine ab. Eine ideale Einleitung der auftretenden Kräfte in den Standort der Arbeitsmaschine erhöht die Standfestigkeit und folglich die mögliche Belastung der Maschine.

So muss z. B. die Verankerung eines Kranturms in einem Ortbetonfundament die auftretenden Kräfte aus dem Kranturm in das Fundament ableiten. Die Einleitung der Druckkräfte erfolgt meist über entsprechende Druckkontaktflächen. Die anliegenden Zugkräfte müssen entweder ebenfalls über diese Kontaktflächen, dann jedoch in umgekehrter Richtung, oder aber über zusätzliche Zugelemente in das Fundament eingeleitet werden.

Für die mögliche Verankerung bekannter Turmdrehkrane in einem bauseits hergestellten Betonfundament sind bereits verschiedenste Lösungen bekannt. Die wahrscheinlich häufigste Lösung sieht die Verwendung von Verankerungsfüßen vor, meist als Fundamentanker bezeichnet, die vor dem Betonieren des Fundamentes positioniert und ausgerichtet werden und nach Herstellung der Betonbewehrung fest eingegossen sind. Das Eingießen der genannten Fundamentanker in das Betonfundament schließt jedoch eine mögliche Wiederverwendung aus, da die Füße nur durch unökonomischen Kostenaufwand aus dem Fundament zu befreien sind. Die gesamte Verankerungsmethode gestaltet sich demnach nicht nur als aufwendig, sondern gleichfalls als kostenintensiv.

Eine Alternative besteht in der Verwendung von Verankerungselementen, die mit dem Turm des Krans und dann bauseits mit dem Fundament zugfest verbunden werden. Hierzu werden meist Steinschrauben bzw. Gewindestangen verwendet. Diese Bauteile gelten jedoch üblicherweise als verloren, da ein Ausbau nicht möglich und die erneute Wiederverwendung ausgeschlossen ist.

Aus der Druckschrift US 5,016,338 A ist eine Verankerungsvorrichtung zur Verankerung einer Arbeitsmaschine an einem Fundament bekannt. Diese Vorrichtung weist einen viereckigen Verankerungsrahmen zur Aufnahme der Arbeitsmaschine auf, wobei der Verankerungsrahmen in seinen Eckpunkten jeweils über wenigstens ein Rohr mit wenigstens einer Gegenplatte verbunden ist.

Die Aufgabe der vorliegenden Erfindung besteht nun darin, eine Verankerungsvorrichtung mit einer sicheren Kraftableitung in das Fundament aufzuzeigen, deren Auf- bzw. Einbau weniger fehleranfällig ist und die notwendige Kostenaufwendung möglichst erträglich gestaltet.

Die genannte Aufgabe wird durch die Merkmalskombination des Anspruchs 1 gelöst.

Demnach umfasst die Verankerungsvorrichtung einen viereckigen Verankerungsrahmen zur Aufnahme der Arbeitsmaschine, wobei der Verankerungsrahmen in seinen Eckpunkten jeweils über wenigstens ein Rohr, insbesondere Vierkantrohr, mit wenigstens einer Gegenplatte in Verbindung steht. Pro Eckpunkt ist wenigstens ein Zugelement vom Verankerungsrahmen durch das Rohr/Vierkantrohr zur Gegenplatte durchführbar und mit dieser lösbar verankerbar.

Grundsätzlich können beliebige rohrförmige Elemente als Rohr Anwendung finden. Der Einsatz eines Vierkantrohrs erweist sich jedoch als besonders vorteilhaft und wird im nachfolgenden Teil der Beschreibung durchgängig verwendet. Die Erfindung soll aber keinesfalls darauf beschränkt sein.

Denkbar ist der Einsatz von mindestens zwei, insbesondere von genau vier Zugelementen pro Eckpunkt bzw. pro Gegenplatte. Pro Zugelement ist zweckmäßig ein Vierkantrohr installiert.

Zur Verankerung wird der flüssige Beton zur Herstellung des Fundamentes eingegossen. Der Verankerungsrahmen liegt auf der Oberfläche des erhärteten Betonfundamentes auf, wobei die Vierkantrohre sowie die Gegenplatte vollständig im Fundament eingegossen sind. Der Verankerungsrahmen dient dabei hauptsächlich zur Einleitung der Druckkräfte in das Fundament, wohingegen eine Einleitung der Zugkräfte über die Zugelemente und der endseitig befestigten Gegenplatte in das Fundament erfolgt.

Alle tragenden Verbindungsmittel zwischen Arbeitsmaschine und Fundament sind auch nach erfolgter Montage der Arbeitsmaschine zugänglich und austauschbar. Der Einsatz der verbauten Vierkantrohre erlaubt die spätere Entnahme der Zugelemente nach erfolgter Demontage der Arbeitsmaschine, um diese erneut für eine Verankerung wiederzuverwenden. Auch der Verankerungsrahmen kann vollständig für eine erneute Verankerung benutzt werden.

Eine alternative Ausführungsform zur Lösung der gestellten Aufgabe bietet die Verankerungsvorrichtung gemäß der Merkmalskombination des Anspruchs 2. Demnach weist die beanspruchte Verankerungsvorrichtung zur Verankerung einer Arbeitsmaschine, insbesondere Kran, an einem Fundament mindestens zwei, insbesondere vier Verankerungselemente zur Aufnahme der Arbeitsmaschine auf, wobei jedes Verankerungselement eine auf dem Fundament aufliegende Aufnahmeplatte umfasst, die über wenigstens ein Rohr, insbesondere Vierkantrohr, mit wenigstens einer Gegenplatte in Verbindung steht, wobei wenigstens ein Zugelement zur lösbaren Verankerung des Verankerungselementes mit der oder den Gegenplatten durch das Vierkantrohr durchführbar ist.

Beispielsweise werden genau vier Verankerungselemente für die Verankerung der vier Eckpunkte eine Kranturmstücks als Verankerungsvorrichtung verwendet.

Denkbar ist der Einsatz von mindestens zwei, insbesondere von genau vier Zugelementen pro Verankerungselement bzw. pro Aufnahmeplatte/Gegenplatte. Pro Zugelement ist zweckmäßig ein Vierkantrohr installiert.

Zur Verankerung wird der flüssige Beton um die stehenden Verankerungselemente zur Herstellung des Fundamentes eingegossen. Die Aufnahmeplatten liegen auf der Oberfläche des erhärteten Betonfundamentes auf, wobei die Vierkantrohre sowie die Gegenplatte vollständig im Fundament eingegossen sind. Die Verankerungselemente dienen dabei hauptsächlich zur Einleitung der Druckkräfte in das Fundament, wohingegen eine Einleitung der Zugkräfte über die Zugelemente und der endseitig befestigten Gegenplatte in das Fundament erfolgt.

Alle tragenden Verbindungsmittel zwischen Arbeitsmaschine und Fundament sind auch nach erfolgter Montage der Arbeitsmaschine zugänglich und austauschbar. Der Einsatz der verbauten Vierkantrohre erlaubt die spätere Entnahme der Zugelemente nach erfolgter Demontage der Arbeitsmaschine, um diese erneut für eine Verankerung wiederzuverwenden. Auch die Aufnahmeplatten können vollständig für eine erneute Verankerung benutzt werden.

Die Aufnahmeplatte kann bevorzugt wenigstens einen senkrecht auf der Aufnahmeplattenoberseite stehenden Zapfen und/oder eine senkrecht auf der Aufnahmeplattenoberseite stehenden Zapfenaufnahme aufweisen, die für die Befestigung der Arbeitsmaschine, insbesondere eines Turmstücks, geeignet ist

Weitere vorteilhafte Ausführungen der Verankerungsvorrichtung gemäß Anspruch 1 sowie der alternativen Ausführung gemäß Anspruch 2 sind Gegenstand der abhängigen Ansprüche 4 bis 10.

Verteilhafterweise sind ein oder mehrere Zugelemente ais Hammerschrauben ausgeführt, die lösbar mit dem Verankerungsrahmen/Aufnahmeplatten sowie der Gegenplatte verbindbar sind. Der Hammerkopf ist zweckmäßig am an der Gegenplatte anliegenden Hammerschraubenende befestigt.

Die korrekte Verschraubung wenigstens einer Hammerschraube mit der Gegenplatte ist vorzugsweise durch eine geeignete Formgebung der Anlagefläche an der Gegenplatte sichergestellt. Der Hammerkopf ist beispielsweise durch die Ausbildung einer Führung auf der Gegenplatte in Form einer Nut korrekt positioniert. Die Montage der Vorrichtung gestaltet sich als Konsequenz weniger fehleranfällig. Die korrekte Positionierung des Hammerkopfes wird durch entsprechende Kennzeichnung am oben liegenden Ende der Hammerschraube sichergestellt.

Zur Verstärkung der Gegenplatte sind ein oder mehrere Zusatzplatten an der Gegenplatte angeordnet. Eine besonders effektive Verstärkung wird vorzugsweise durch die Verwendung wenigstens einer Zusatzplatte aus höherfestem Stahl erzielt. Insbesondere ist der Kontaktbereich der Zugelemente vorzugsweise des Hammerkopfes mit der Gegenplatte verstärkt ausgeführt.

Es kann zweckmäßig sein, wenigstens eine Abdeckung zum Schutz wenigstens eines Zugelementes an der Gegenplatte zu installieren. Die Abdeckung schützt vorzugsweise wenigstens einen Teilbereich des Zugelementes vor dem einfließenden Beton bei der Fundamentherstellung, um die nachhaltige Beweglichkeit und Demontagemöglichkeit des Zugelementes sicherzustellen. Zweckmäßig wird der Bereich um den Hammerkopf durch die Abdeckung geschützt. Weiterhin zweckmäßig ist die Ausführung wenigstens einer Abdeckung als Blechkonstrukt, das an der Gegenplatte angeordnet ist.

Zur exakten Höhenjustierung der Verankerungsvorrichtung ist vorteilhafterweise wenigstens ein Justierungsmittel bzw. eine Stellvorrichtung insbesondere an der Gegenplatte angeordnet. Besonders bevorzugt ist der Einsatz wenigstens einer Stellschraube an wenigstens einer Gegenplatte.

Vorteilhafterweise ist die geometrische Form der unterseitigen Kontaktflächen des Verankerungsrahmens bzw. der Aufnahmeplatten derart ausgeführt, dass die fehlstellenfreie Betonierung der Anschlußfuge zum Fundament möglicht ist. Dies wird vorzugsweise durch eine Ausführung der Kontaktflächen in nicht horizontaler Weise erreicht.

Ferner ist es vorteilhaft, ein oder mehrere Öffnungen in der genannten Kontaktfläche des Verankerungsrahmens/Aufnahmeplatten zum Beton vorzusehen. Durch die Öffnungen wird ein Zugang zu der Grenzfläche zwischen Verankerungsrahmen/Aufnahmeplatten und Betonfundament ermöglicht, der insbesondere zum Anschluß einer Verpress- oder Verdichtungsvorrichtung geeignet ist.

In einer besonders bevorzugten Ausgestaltung der Erfindung ist der Verankerungsrahmen der Verankerungsvorrichtung demontierbar, faltbar, teilbar, klappbar oder in ähnlicher Weise verstellbar ausgeführt, so dass die zulässige Standardtransportbreite während des Straßentransports eingehalten werden kann.

Die Stabilisierung des Verankerungsrahmens während des Straßentransportes bzw. während der Montage wird vorteilhafterweise mittels einer demontierbaren Strebe sichergestellt. Vorzugsweise sind ein oder mehrere Quer- bzw. Diagonalstreben montierbar. Vor der Montage des Arbeitsmaschine auf dem Verankerungsrahmen wird/werden die Strebe(n) demontiert und gegebenenfalls in einer dafür ausgelegten Strebenaufnahme am Verankerungsrahmen verstaut und gesichert.

Denkbar ist es, ein oder mehrere Einbauhilfen für die Stahlbewehrung des Fundamentes an den einzubetonierenden Vorrichtungskomponenten, insbesondere an den Zugelementen bzw. Gegenplatten zu integrieren.

Eine weitere vorteilhafte Ausgestaltung der Erfindung betrifft die Auslegung und Festigkeit des Rohres, das derart gestaltet ist, dass es beim Vorspannen des Zugelementes, also beispielsweise der Hammerschraube, ausreichend gestaucht werden kann. Ziel ist es, das Rohr soweit zu stauchen, dass eine ausreichende Pressung zwischen der oberseitigen Platte und der Betonoberseite erfolgt. Dabei muss die Festigkeit des Rohres natürlich so groß gewählt werden, dass das Eigengewicht der Verankerungsteile und gegebenenfalls des darauf montierten Turmelementes aufgenommen werden kann.

Die Erfindung betrifft des weiteren einen stationären Kran, insbesondere einen Turmdrehkran, mit einer Verankerungsvorrichtung bzw. einem Verankerungsrahmen/Verankerungselement gemäß einer der voranstehend beschriebenen Ausführungen.

Die Erfindung betrifft weiterhin ein Verfahren zur Verankerung einer Arbeitsmaschine an einem Betonfundament mit Hilfe der erfindungsgemäßen Verankerungsvorrichtung. Erfindungsgemäß ist es vorgesehen, dass die Verankerungsvorrichtung vor der Einbetonierung vollständig außerhalb des Einsatzortes oder auf der Baustelle vormontiert und am Einsatzort entsprechend positioniert und ausgerichtet wird, bevor das Fundament eingegossen wird.

Die Montage der Verankerungsvorrichtung bzw. die nachfolgende Verankerung der Arbeitsmaschine ist deutlich weniger fehleranfällig und die anfallenden Kosten für den Verankerunsprozeß lassen sich hinreichend begrenzen. Die Möglichkeit der vollständigen Vormontage gewährleistet eine unproblematische Zugänglichkeit aller wichtigen Verankerungselemente.

Nach der Beendigung der Maschinenarbeit lassen sich Verankerungsrahmen/Aufnahmeplatten und Zugelemente vollständig vom Betonfundament demontieren und für eine erneute Verankerung der Arbeitsmaschine wiederverwenden.

Das passgenaue Setzen der gesamten Verankerungsvorrichtung wird durch den Verankerungsrahmen maßgeblich vereinfacht. Eine Schablone oder die hilfsweise Montage eines Turmstücks ist in diesem Fall nicht zwingend erforderlich. Bei der Verwendung von einzelnen Verankerungselementen wird zum passgenauen Setzen hilfsweise eine Schablone verwendet bzw. vorab ein Turmstück, insbesondere der Mastfuß eines Turmkrans, auf den Aufnahmeplatten montiert. Im Anschluß an das Setzen des Verankerungsrahmens bzw. der Verankerungselemente wird bevorzugt eine exakte Höhenjustierung der Verankerungsvorrichtung durch die genannte Stellmöglichkeit an der Unterseite der Gegenplatte erzielt.

Zur Verdichtung des Betons zwischen den Kontaktflächen des Verankerungsrahmens/Aufnahmeplatten und des Betonfundamentes wird vorzugsweise eine Verpressvorrichtung, insbesondere ein Rüttelschlauch, angeschlossen. Die Verpressvorrichtung lässt sich vorteilhafterweise an den Öffnungen der Kontaktflächen des Verankerungsrahmens/Aufnahmeplatten anschließen.

Zur Herstellung eines druckfesten Kontaktes zwischen Verankerungsrahmen/Aufnahmeplatten und der ausgehärteten Betonoberfläche wird zweckmäßig ein Spezialmörtel eingebracht, um eine fehlstellenfreie Verfüllung des Zwischenraumes zum Beton zu ermöglichen.

Weitere Vorteile und Eigenschaften der Erfindung werden anhand eines in den Figuren dargestellten Ausführungsbeispiels näher erläutert. Es zeigen:
- Figur 1:: den erfindungsgemäßen Verankerungsrahmen in einer perspektivischen Seitenansicht,
- Figur 2:: den erfindungsgemäßen Verankerungsrahmen mit montierten Verankerungselementen in einer perspektivischen Seitenansicht,
- Figur 3:: den erfindungsgemäßen Verankerungsrahmen mit montiertem Kranturmstück in einer Seitenansicht,
- Figur 4:: die erfindungsgemäße Verankerungsvorrichtung in einer Unteransicht,
- Figur 5:: eine Schnittdarstellung der Verankerungsvorrichtung entlang der Schnittachse A-A aus Figur 4,
- Figur 6:: eine vergrößerte Detailansicht der erfindungsgemäßen Verankerungsvorrichtung in einer Draufsicht,
- Figur 7:: eine Detaildarstellung der Gegenplatte in einer perspektivischen Seitenansicht und
- Figur 8:: mögliche Ausführung der alternativen Ausgestaltung der Verankerungsvorrichtung mit einzelnen Verankerungselementen.

Im nachfolgenden Teil wird eine erfindungsgemäße Ausführung der Verankerungsvorrichtung für einen Turmdrehkran vorgestellt. Die Verankerung des Kranturms in einem Ortbetonfundament soll die auftretenden Druck- und Zugkräfte in das Fundament einleiten.

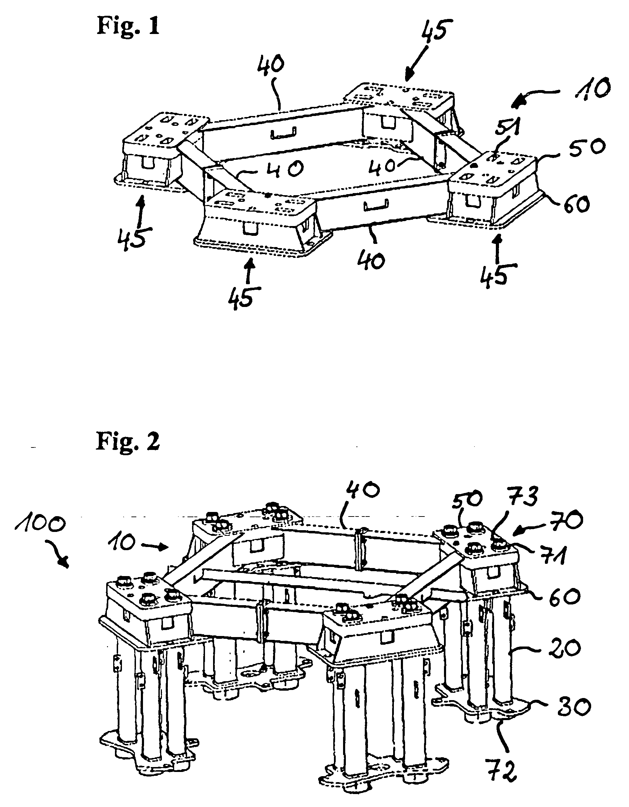

Figur 1 zeigt den viereckigen Verankerungsrahmen 10 der erfindungsgemäßen Verankerungsvorrichtung 100. Die Rahmenstruktur entspricht im wesentlichen der eines Quadrats, wobei der Rahmen 10 zweckmäßig an die Form des aufzunehmenden Gitterstücks 200 des Turmdrehkrans angepasst ist. Die Rahmenstruktur besteht aus vier im wesentlichen gleichlangen waagrechten Seitenelementen, den Riegeln 40, die im rechten Winkel mittelbar über die Verankerungsblöcke 45 in Verbindung stehen. Jeder Verankerungsblock 45 weist eine quaderförmige Struktur auf oder besteht aus einer dicken Platte, wobei die unten liegende Grundfläche, auch als Verankerungsplatte 60 bezeichnet, auf dem nicht dargestellten Betonfundament aufliegt. Die oben liegende Fläche 50 weist geeignete Aufnahmen für die Befestigung des Mastfusses eines Turmdrehkrans auf. Die geometrische Anordnung der Längsseite der Verankerungsblöcke 45 am Verankerungsrahmen 10 erfolgt im dargestellten Ausführungsbeispiel in etwa um 45° geneigt zur axialen Ausrichtung der Riegel 40. Die Neigung ist abhängig von der geometrischen Ausgestaltung des jeweiligen Krananschlussstückes.

Die besondere geometrische Gestaltung der unterseitigen Kontaktflächen, das heißt der Verankerungsplatten 60, ermöglicht die fehlstellenfreie Betonierung der Anschlußfuge zum Fundament. Insbesondere können hierzu die Verankerungsplatten 60 in nicht horizontaler Weise ausgeführt werden.

Zur Aufnahme und Durchführung der Zugelemente dienen jeweils vier Öffnungen bzw. Durchführungen 51 auf der oben liegenden Fläche 50 der Verankerungsblöcke 45.

Figur 2 zeigt eine vollständige Verankerungsvorrichtung 100. Als Zugelemente werden Hammerschrauben 70 eingesetzt, die sich in axialer Richtung senkrecht zu den Flächen 50, 60 in das Betonfundament in Richtung der gezeigten Gegenplatte 30 erstrecken, um die anliegenden Zugkräfte in das Fundament zu übertragen. Der Hammerkopf 72 wird an der Unterseite der Gegenplatte 30 positioniert und das am Verankerungsblock 45 überstehende Schraubenende 71 wird mittels Schraubenmutter 73 fixiert. Pro Verankerungsblock 45 verlaufen jeweils vier Hammerschrauben 70 zu einer dem Verankerungsblock 45 zugeordneten Gegenplatte 30.

Die Möglichkeit zur vollständigen Demontage der verwendeten Hammerschrauben 70 nach dem erfolgten Kranbetrieb wird durch die zwischen Verankerungsblöcken 45 und Gegenplatten 30 integrierten Vierkantrohre 20 erlangt. Jede Hammerschraube 70 erstreckt sich zum Schutz vor einfließendem Beton in axialer Richtung durch ein zugeordnetes Vierkantrohr 20 in Richtung der Gegenplatte 30.

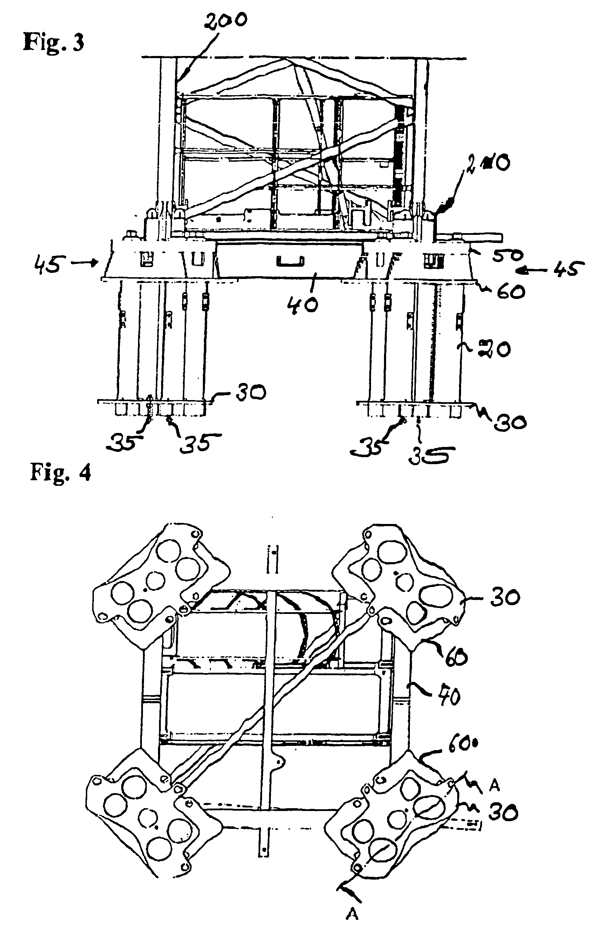

Figur 3 zeigt die erfindungsgemäße Verankerungsvorrichtung 100 mit aufgesetztem Gitterstück 200 eines Turmdrehkrans. Die Befestigung des Gitterstücks 200 erfolgt über die Verschraubung 210, wobei die Verschraubung der Eckpunkte des Gitterstücks 200 mit den jeweiligen Verschraubungsstellen der Verankerungsblöcke 45 erfolgt.

Im dargestellten vormontierten Zustand wird die Verankerungsvorrichtung 100 zum jeweiligen Einsatzort transportiert und in der Fundamentgrube am Einsatzort paßgenau positioniert und ausgerichtet.

Zur Höhenjustierung und Nivellierung der Verankerungsvorrichtung 100 dient jeweils eine Stellschraube 35 pro Gegenplatte 30. Ferner können an den Verankerungsmitteln, insbesondere an den Vierkantrohren 20, sowie an den Gegenplatten 30 ein oder mehrere Einbauhilfen für die Stahlbewehrung des Fundamentes vorhanden sein. Zum Abbau der Verankerung nach dem erfolgten Kranbetrieb lässt sich der Verankerungsrahmen 10 sowie die Hammerschrauben 70 vollständig aus dem Fundament lösen. Lediglich die Vierkantrohre 20 sowie die Gegenplatten 30 verbleiben im Fundament und können in der Regel nicht mehr für eine erneute Verankerung eines Krans zum Einsatz kommen.

Figur 4 zeigt die vormontierte Verankerungsvorrichtung 100 in einer Untenansicht. Pro Gegenplatte 30 existieren vier symmetrisch angeordnete Durchführungen für die Hammerschrauben 70, speziell für die Hammerköpfe 72.

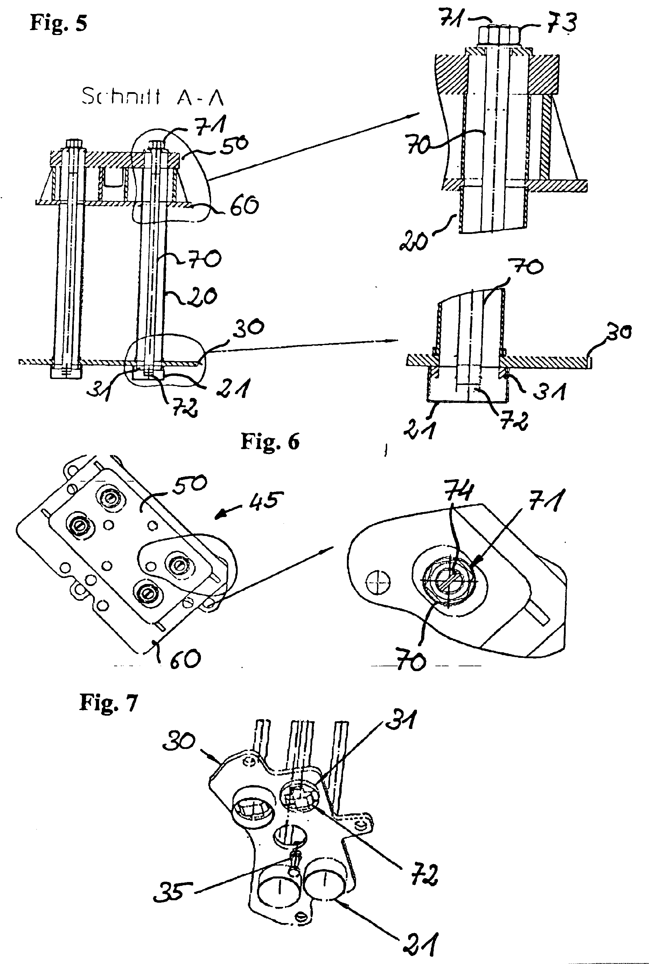

Figur 5 zeigt eine Schnittdarstellung entlang der in Figur 4 dargestellten Schnittlinie A-A. Die Hammerschraube 70 ist in axialer Richtung vom Verankerungsblock 45 durch das Vierkantrohr 20 zur Gegenplatte 30 geführt. Die korrekte Position des Hammerkopfes 72 an der unten liegenden Anlagefläche der Gegenplatte 30 wird durch eine entsprechende Führung auf der Gegenplatte 30 sichergestellt. Zweckmäßig ist die Ausbildung einer Nut zur Beschränkung der möglichen Bewegungsrichtung des Hammerkopfes 72. Das oben liegende Schraubenende 71 weist eine aussagekräftige Kennzeichnung auf, um die korrekte Position des Hammerkopfes 72 zu symbolisieren.

Die Gegenplatte 30 kann zusätzlich im Bereich der Hammerkopfauflage durch eine Zusatzplatte 31 aus höherfestem Stahl verstärkt sein. Die Zusatzplatte 31 weist in analoger Weise eine passende Führung in Form einer Nut für den Hammerkopf 72 auf. Der unterhalb der Gegenplatte 30 liegenden Hammerkopf 72 wird mittels der Blechkonstruktion 21 vor dem eingegossenen Beton geschützt.

Figur 6 zeigt eine Detailansicht des Verankerungsblockes 45 in einer Draufsicht. In der Zeichnung ist die eingangs zitierte Kennzeichnung der korrekten Position des Hammerkopfes 72 am Schraubenende 71 gut zu erkennen. Das obere Hammerschraubenende 71 besitzt einen Längsspalt 74, der bei korrekter Hammerkopfposition die dargestellte Ausrichtung einnimmt.

Die Verankerungsplatten 60 der Verankerungsblöcke 45 ermöglichen mittels der gezeigten Öffnungen den Zugang zum unterhalb der Kontaktfläche 60 liegenden Betonfundament. Die Öffnungen erlauben speziell die Einbringung eines Rüttel-Schlauches, um den unterhalb der Verankerungsplatten 60 liegenden Betonanteil des Fundaments zu verdichten.

Ferner können die Öffnungen zur Herstellung eines druckfesten Kontaktes zwischen Verankerungsrahmen 10 bzw. Verankerungsplatten 60 und der ausgehärteten Betonoberfläche des Betonfundamentes genutzt werden. Hierzu lässt sich über die Öffnungen eine Zwischenlage aus Spezialmörtel einbringen, um eine fehlstellenfreie Verfüllung des Zwischenraumes zum Beton sicherzustellen.

Figur 7 zeigt eine perspektivische Detailansicht der Gegenplatte 30. Die Gegenplatte 30 ist mit montierten Hammerschrauben 70 dargestellt, wobei die in der Zeichnungsebene rechts oben liegende Hammerschraube 70 ohne die Blechkonstruktion 21 zur Abdeckung des Hammerkopfes 72 eingezeichnet ist. Ferner ist die Stellschraube 35 zur Höhenjustierung der erfindungsgemäßen Verankerungsvorrichtung zu erkennen.

Optional kann der erfindungsgemäße Verankerungsrahmens 10 teilbar, das heißt demontierbar, ausgeführt sein, um gegebenenfalls die zulässige Standardtransportbreite beim Straßentransport nicht zu überschreiten. Zur Sicherung der Rechtwinkligkeit des Verankerungsrahmens 10 wird während des Einbaus eine Strebe montiert. Vor der Montage des Kranturmes wird diese Strebe ausgebaut und in einer vorbereiteten Aufnahme an der Verankerungsvorrichtung gelagert und gesichert.

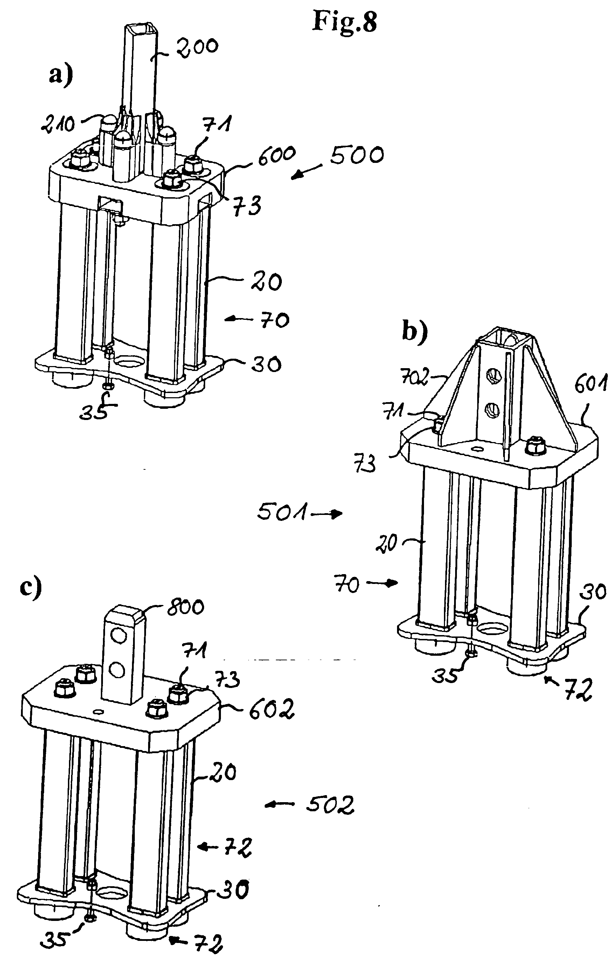

Eine alternative Ausgestaltung der Erfindung ist den Figuren 8a bis 8c zu entnehmen. Die Figuren zeigen unterschiedliche Ausführungsformen eines einzelnen Verankerungselementes 500, 501, 502. Zur Verankerung des Turmkrans werden vier einzelne Verankerungselemente 500, 501, 502 ohne Rahmen verwendet. Der Aufbau der gezeigten Verankerungselemente 500, 501, 502 unterscheidet sich nur in der unterschiedlichen Ausgestaltung der Aufnahmeplatten 600, 601, 602.

Die übrige Ausgestaltung der Verankerungselemente 500, 501, 502 gleicht im Wesentlichen der Ausführungsform gemäß den Figuren 1 bis 7. Gleiche Komponenten tragen identische Bezugszeichen. Zur ausführlichen Beschreibung sei auf die Figuren 1 bis 7 verwiesen, weshalb an dieser Stelle nur eine kurze Wiederholung des Aufbaus wiedergegeben wird.

Jeweils vier Vierkantrohre 20 verlaufen zwischen der Aufnahmeplatte 600, 601, 602 bis zu der Gegenplatte 30. Als Zugelemente werden Hammerschrauben 70 eingesetzt, die sich in axialer Richtung senkrecht von der Aufnahmeplatte 600, 601, 602 in das Betonfundament in Richtung der gezeigten Gegenplatte 30 erstrecken, um die anliegenden Zugkräfte in das Fundament zu übertragen. Jede Hammerschraube 70 erstreckt sich zum Schutz vor einfließendem Beton in axialer Richtung durch das zugeordnete Vierkantrohr 20. Der Hammerkopf 72 wird an der Unterseite der Gegenplatte 30 positioniert und das an der Aufnahmeplatte 600, 601, 602 überstehende Schraubenende 71 wird mittels Schraubenmutter 73 fixiert. Zur Höhenjustierung und Nivellierung jedes einzelnen Verankerungselementes 500, 501, 502 dient jeweils eine Stellschraube 35 pro Gegenplatte 30.

Alternativ könnte statt einer gemeinsamen Gegenplatte 30 auch pro Hammerschraube 70 bzw. pro Vierkantrohr 20 eine separate zugewiesene Gegenplatte vorgesehen sein.

Die Aufnahmeplatten 600, 601, 602 der Figuren 8a bis 8c unterscheiden sich in der Ausprägung des Fixierungsmittels zur Befestigung der Verankerungselemente 500, 501, 502 an den Eckpunkten eines Krangitterstücks. Die Fixierung des Gitterstücks 200 an der Aufnahmeplatte 600 der Figur 8a ist äquivalent zu dem in Figur 3 dargestellten Mechanismus des Verankerungsrahmens 10 realisiert. Das aufgenommene Gitterstück 200 wird mit Hilfe der Verschraubung 210 ausreichend fixiert.

Figur 8b zeigt eine alternative Ausführung mit einer Zapfenaufnahme 700, die auf der Oberseite der Aufnahmeplatte 601 angeordnet ist und einen senkrecht zur Aufnahmeplatte 601 ausgerichteten passenden Zapfen aufnehmen kann. Das Gitterstück eines Krans sieht hierzu pro Eckpunkt mindestens einen Zapfen vor, der in den Hohlraum der Zapfenaufnahme 700 einführbar ist.

Zur Fixierung weisen zwei gegenüberliegende Zapfenaufnahmewandungen sowie der Zapfen selbst zwei Bohrungen 701 auf, durch die quer zu den Zapfenaufnahmewandungen jeweils ein Bolzen durchführbar ist. Zur Stabilisierung der Zapfenaufnahme sind pro Seitenwandung jeweils zwei Stabilisierungselemente 702 in Form eines Dreiecks mit der Aufnahmeplatte 601 verschweißt.

Das vorstehend beschriebene Fixierungsprinzip kann ebenfalls mit invertierter Anordnung der Verbindungskomponenten erfolgen. Im Ausführungsbeispiel der Figur 8c weist die Aufnahmeplatte 602 den Zapfen 800 auf, der in die entsprechende an den Eckpunkten des Gitterstücks angeordnete Aufnahme einführbar ist. Für die Bolzendurchführung weist der Zapfen 800 die entsprechenden Bohrungen 801 auf.

Die geometrische Ausgestaltung der erfindungsgemäßen Verankerungsvorrichtungen bzw. der einzelnen Vorrichtungskomponenten ist üblicherweise derart ausgeführt, dass eine Lagerung der Einzelkomponenten für die Vormontage auf einer horizontalen Fläche ohne zusätzliche Hilfsmittel zur Unterstützung oder Sicherung möglich ist. Der Einbau aller erforderlichen Anschlagpunkte für die Handhabung der Einzelteile, der vormontierten Baugruppen bzw. der Gesamtkonstruktion beim Transport und beim Einbau in die Fundamentgrube erfolgt in der Regel werkseitig.

Weiterhin gewährleistet die erfindungsgemäße Verankerungsvorrichtung eine uneingeschränkte Zugänglichkeit und Austauschbarkeit aller tragenden Verbindungsmittel zwischen Kranturm und Fundament, insbesondere auch nach der erfolgten Montage des Kranturmes.

Die erfindungsgemäße Verankerungsvorrichtung sichert die ordnungsgemäße Einleitung der auftretenden Zug- und Druckkräfte in das Fundament und ermöglicht den Austausch sowie die spätere Demontage und Wiederverwendung der Verbindungselemente.

## Patentansprüche

1. Verankerungsvorrichtung zur Verankerung einer Arbeitsmaschine, insbesondere Kran, an einem Fundament, mit einem viereckigen Verankerungsrahmen (10) zur Aufnahme der Arbeitsmaschine, wobei der Verankerungsrahmen (10) in seinen Eckpunkten jeweils über wenigstens ein Rohr, insbesondere Vierkantrohr (20), mit wenigstens einer Gegenplatte (30) in Verbindung steht, wobei wenigstens ein Zugelement zur lösbaren Verankerung des Verankerungsrahmens (10) mit der oder den Gegenplatten (30) durch das Rohr durchführbar ist.

2. Verankerungsvorrichtung zur Verankerung einer Arbeitsmaschine, insbesondere Kran, an einem Fundament, mit mindestens zwei, insbesondere vier Verankerungselementen (500; 501; 502) zur Aufnahme der Arbeitsmaschine, wobei jedes Verankerungselement (500, 501, 502) jeweils eine auf dem Fundament aufliegende Aufnahmeplatte (600; 601; 602) umfasst, die über wenigstens ein Rohr, insbesondere Vierkantrohr (20), mit wenigstens einer Gegenplatte (30) in Verbindung steht, wobei wenigstens ein Zugelement zur lösbaren Verankerung des Verankerungselementes (500; 501; 502) mit der oder den Gegenplatten (30) durch das Rohr durchführbar ist.

3. Verankerungsvorrichtung nach Anspruch 2, wobei die Aufnahmeplatte (600; 601; 602) wenigstens einen senkrecht auf der Aufnahmeplattenoberseite stehenden Zapfen (800) und/oder Zapfenaufnahme (700) für die Befestigung der Arbeitsmaschine, insbesondere eines Turmstücks, aufweist.

4. Verankerungsvorrichtung nach einem der vorhergehenden Ansprüche, wobei wenigstens ein Zugelement eine Hammerschraube (70) ist.

5. Verankerungsvorrichtung nach Anspruch 4, wobei die korrekte Verschraubrichtung wenigstens einer Hammerschraube (70) durch eine geeignete Formgebung der Anlagefläche an der Gegenplatte (30), insbesondere durch eine Nut, sichergestellt ist.

6. Verankerungsvorrichtung nach einem der vorhergehenden Ansprüche, wobei die Gegenplatte (30) im Anlagebereich wenigstens eines Zugmittels durch wenigstens eine Zusatzplatte verstärkt ist.

7. Verankerungsvorrichtung nach einem der vorhergehenden Ansprüche, wobei wenigstens eine Abdeckung an der Gegenplatte (30) zur Abdeckung eines Teilbereichs mindestens eines Zugelementes vorgesehen ist, insbesondere zur Abdeckung wenigstens eines Hammerkopfes (72).

8. Verankerungsvorrichtung nach einem der vorhergehenden Ansprüche, wobei wenigstens ein Justierungsmittel, insbesondere Stellschraube, zur Höhenjustierung der Verankerungsvorrichtung vorgesehen ist, wobei wenigstens ein Justierungsmittel vorzugsweise an der Gegenplatte (30) angeordnet ist.

9. Verankerungsvorrichtung nach einem der vorhergehenden Ansprüche, wobei ein oder mehrere Kontaktflächen des Verankerungsrahmens (10) bzw. des Verankerungselementes (500; 501; 502) mit dem Fundament eine oder mehrere Öffnungen aufweisen, die insbesondere zum Anschluss einer Verpressvorrichtung geeignet sind.

10. Verankerungsvorrichtung nach einem der vorhergehenden Ansprüche, **dadurch gekennzeichnet, dass** das wenigstens eine Rohr hinsichtlich seiner Festigkeit und seiner Formgebung derart gestaltet ist, dass es beim Vorspannen des Zugelementes gestaucht werden kann.

11. Verankerungsvorrichtung nach einem der vorhergehenden Ansprüche, wobei der Verankerungsrahmen (10) demontierbar, faltbar, teilbar, klappbar oder verstellbar ausgeführt ist und wobei wenigstens eine Strebe, insbesondere Quer- und/oder Diagonalstrebe, zum Transport und/oder zur Montage des Verankerungsrahmens montierbar ist und ggf. wenigstens eine Aufnahme am Verankerungsrahmen zur zeitweisen Lagerung wenigstens einer demontierbaren Strebe vorgesehen ist.

12. Stationärer Kran, insbesondere Turmdrehkran, mit einer Verankerungsvorrichtung gemäß einem der Ansprüche 1 bis 11.

13. Verfahren zur Verankerung einer Arbeitsmaschine an einem Betonfundament mit einer Verankerungsvorrichtung gemäß einem der Ansprüche 1 bis 11, wobei die Verankerungsvorrichtung vollständig außerhalb des Einsatzortes vormontiert und am Einsatzort positioniert und ausgerichtet wird, bevor das Fundament eingegossen wird.

14. Verfahren nach Anspruch 13, wobei zur Verdichtung des Betons zwischen den Kontaktflächen des Verankerungsrahmens (10) bzw. der Aufnahmeplatten (600, 601, 602) und des Betons eine Verpressvorrichtung, insbesondere ein Rüttelschlauch angeschlossen wird, wobei durch die Öffnungen der Kontaktfläche zwischen Verankerungsrahmen/Aufnahmeplatten und ausgehärtetem Betonfundament eine Zwischenlage, vorzugsweise Spezialmörtel, zur Herstellung eines druckfesten Kontaktes einbringbar ist.

## Claims

1. An anchorage device for the anchorage of a machine, in particular a crane, to a foundation, with a square anchorage frame (10) to hold the machine, wherein the anchorage frame (10) is connected at each of its corner points by at least one pipe, in particular a square-section pipe (20), to at least one counterplate (30), wherein at least one tensile element can be inserted through the pipe for the detachable anchorage of the anchorage frame (10) with the counterplate or counterplates (30).

2. An anchorage device for the anchorage of a machine, in particular a crane, to a foundation, with at least two, in particular four, anchorage elements (500; 501; 502) to hold the machine, wherein each anchorage element (500, 501, 502) comprises a holding plate (600; 601; 602) lying on the foundation which is connected by at least one pipe, in particular a square-section pipe (20), to at least one counterplate (30), wherein at least one tensile element can be inserted through the pipe for the detachable anchorage of the anchorage element (500; 501; 502) with the counterplate or counterplates (30).

3. An anchorage device in accordance with claim 2, wherein the holding plate (600; 601; 602) has at least one vertical spigot (800) and/or spigot holder (700) on the upper side of the holding plate to fix the machine, in particular a tower piece.

4. An anchorage device in accordance with one of the previous claims, wherein at least one tensile element is a hammerhead bolt (70).

5. An anchorage device in accordance with claim 4, wherein the correct screwing direction of at least one hammerhead bolt (70) is ensured by a suitable shape of the contact surface of the counterplate (30), in particular by a groove.

6. An anchorage device in accordance with one of the previous claims, wherein the counterplate (30) in the contact area of at least one tensile means is reinforced by at least one additional plate.

7. An anchorage device in accordance with one of the previous claims, wherein at least one cover is provided at the counterplate (30) to cover a part region of at least one tensile element, in particular to cover at least one hammerhead (72).

8. An anchorage device in accordance with one of the previous claims, wherein at least one adjustment means, in particular an adjustment bolt, is provided for the height adjustment of the anchorage device, wherein at least one adjustment means is preferably located on the counterplate (30).

9. An anchorage device in accordance with one of the previous claims, wherein one or more of the contact surfaces of the anchorage frame (10) or the anchorage element (500; 501; 502) with the foundation have one or more openings which, in particular, are suitable for the connection of a compaction device.

10. An anchorage device in accordance with one of the previous claims, **characterized in that** the at least one pipe is designed in terms of its strength and its shape in such a way that it can be compressed when the tensile element is pre-tensioned.

11. An anchorage device in accordance with one of the previous claims, wherein the anchorage frame (10) can be disassembled, folded, divided, collapsed or adjusted and wherein at least one brace, in particular a cross bar and/or a diagonal brace, can be fitted for the transport and/or assembly of the anchorage frame and, optionally, at least one holder is provided on the anchorage frame for interim storage of at least one disassembled brace.

12. A stationary crane, in particular a revolving tower crane, with an anchorage device in accordance with one of the claims 1 to 11.

13. A method for the anchorage of a machine to a concrete foundation with an anchorage device in accordance with one of the claims 1 to 11, wherein the anchorage device is completely pre-assembled off-site and then positioned and aligned at the deployment location before the foundation is poured.

14. A method in accordance with claim 13, wherein a compaction device, in particular a vibrator tube, is connected between the contact surfaces of the anchorage frame (10) or the holding plates (600, 601, 602) and the concrete for compaction of the concrete, wherein an intermediate layer, preferably of special mortar, can be inserted through the openings of the contact surface between the anchorage frame / holding plates and the set concrete of the foundation to ensure a compression-resistant contact.

## Revendications

1. Dispositif d'ancrage destiné à l'ancrage d'une machine de travail, en particulier d'une grue, sur une fondation, comprenant un cadre d'ancrage (10) quadrangulaire destiné à recevoir la machine de travail, le cadre d'ancrage (10) étant en liaison en ses angles avec au moins une contre-plaque (30) respectivement par le biais d'au moins un tube, en particulier d'un tube à section rectangulaire (20), au moins un élément de traction destiné à l'ancrage amovible du cadre d'ancrage (10) avec la ou les contre-plaque(s) (30) pouvant être guidé à travers le tube.

2. Dispositif d'ancrage destiné à l'ancrage d'une machine de travail, en particulier d'une grue, sur une fondation, comprenant au moins deux, en particulier quatre éléments d'ancrage (500 ; 501 ; 502) destinés à recevoir la machine de travail, chaque élément d'ancrage (500, 501, 502) comprenant respectivement une plaque de réception (600, 601 ; 602) reposant sur la fondation, qui est en liaison avec au moins une contre-plaque (30) par le biais d'au moins un tube, en particulier d'un tube à section rectangulaire (20), au moins un élément de traction destiné à l'ancrage amovible de l'élément d'ancrage (500 ; 501 ; 502) avec la ou les contre-plaque(s) (30) pouvant être guidé à travers le tube.

3. Dispositif d'ancrage selon la revendication 2, dans lequel la plaque de réception (600 ; 601 ; 602) comporte au moins un tenon (800) et/ou logement pour tenon (700), placé vertical sur la face supérieure de la plaque de réception, pour la fixation de la machine de travail, en particulier d'une partie de tour.

4. Dispositif d'ancrage selon l'une des revendications précédentes, dans lequel au moins un élément de traction est une vis à tête rectangulaire à angles abattus (70).

5. Dispositif d'ancrage selon la revendication 4, dans lequel le sens de vissage correct d'au moins une vis à tête rectangulaire à angles abattus (70) est assuré par une mise en forme adaptée de la surface d'appui sur la contre-plaque (30), en particulier par une rainure.

6. Dispositif d'ancrage selon l'une des revendications précédentes, dans lequel la contre-plaque (30) est renforcée dans la zone d'appui d'au moins un moyen de traction par au moins une plaque supplémentaire.

7. Dispositif d'ancrage selon l'une des revendications précédentes, dans lequel au moins un élément de recouvrement est prévu sur la contre-plaque (30) pour recouvrir une partie d'au moins un élément de traction, en particulier pour recouvrir au moins une tête rectangulaire à angles abattus (72).

8. Dispositif d'ancrage selon l'une des revendications précédentes, dans lequel au moins un moyen d'ajustage, en particulier une vis de réglage, destiné à l'ajustage en hauteur du dispositif d'ancrage est prévu, au moins un moyen d'ajustage étant disposé de préférence sur la contre-plaque (30).

9. Dispositif d'ancrage selon l'une des revendications précédentes, dans lequel une ou plusieurs surfaces de contact du cadre d'ancrage (10) ou de l'élément d'ancrage (500 ; 501 ; 502) avec la fondation comporte(nt) un ou plusieurs orifices, qui sont adaptés en particulier au raccordement d'un dispositif de compression.

10. Dispositif d'ancrage selon l'une des revendications précédentes, **caractérisé en ce que** l'au moins un tube est conçu en ce qui concerne sa résistance et sa mise en forme de manière à pouvoir être comprimé lors de la précontrainte de l'élément de traction.

11. Dispositif d'ancrage selon l'une des revendications précédentes, dans lequel le cadre d'ancrage (10) est réalisé de manière à pouvoir être démonté, plié, séparé, rabattu ou déplacé et dans lequel au moins une entretoise, en particulier une traverse et/ou une entretoise diagonale, peut être montée pour le transport et/ou pour le montage du cadre d'ancrage et le cas échéant au moins un logement est prévu sur le cadre d'ancrage pour le support temporaire d'au moins une entretoise démontable.

12. Grue stationnaire, en particulier grue-tour, comprenant un dispositif d'ancrage selon l'une des revendications 1 à 11.

13. Procédé d'ancrage d'une machine de travail sur une fondation en béton au moyen d'un dispositif d'ancrage selon l'une des revendications 1 à 11, dans lequel le dispositif d'ancrage est entièrement monté préalablement hors du lieu d'exploitation et positionné et orienté sur le lieu d'exploitation avant que la fondation soit coulée.

14. Procédé selon la revendication 13, dans lequel, pour compacter le béton entre les surfaces de contact du cadre d'ancrage (10) ou des plaques de réception (600, 601, 602) et du béton, on raccorde un dispositif de compression, en particulier un tuyau vibrant, une couche intermédiaire, de préférence du mortier spécial, pouvant être introduite par les orifices de la surface de contact entre le cadre d'ancrage / les plaques de réception et la fondation en béton durcie pour réaliser un contact résistant à la pression.
